# EUROPEAN PATENT APPLICATION

(11) **EP 4 015 890 A1**
(43) Date of publication of application: **22.06.2022**
(21) Application number: 21215833.1
(22) Date of filing: 20.12.2021
(51) Int. Cl.: F16L 55/10, F16K 7/07

(54) **CLOSABLE PIPE COUPLING FOR SELECTIVELY SHUTTING OFF OR OPENING UP A MEDIUM PASSAGE AND A METHOD FOR USING SUCH A PIPE COUPLING**

(30) Priority: 18.12.2020 DE 102020134153
(71) Applicant: Bomech B.V., 7665 SH Albergen (NL)
(72) Inventor: SCHURINK, Gerard Johannes, 5200 BN Albergen (NL); HOEK, Johannes Bernardus Maria, 5200 BN Albergen (NL)
(74) Representative: Patentwerk B.V.

(57) **Abstract**

The present invention relates to a closable pipe coupling for a medium passage, provided with a dimensionally stable hollow profile over a part of the length, an opening being made in the wall of said profile, a flexible closure element which completely covers the opening, and a cover element which covers the flexible closure element at the location of the opening, such that a medium-tight space to which a medium passage connects is situated between the flexible closure element and the cover element at the location of the opening in the profile. The invention also relates to a method for using such a pipe coupling.

## Description

The present invention relates to a closable pipe coupling for selectively shutting off or opening up a medium passage, in particular a liquid fertilizer passage. The invention also relates to a method for using such a pipe coupling.

Existing pipe shut-off means make use of flaps, valves or stopcocks, for example, in order to regulate a flow in a, usually flexible, pipe. Deformable and non-deformable pipes are widely used in the transport of liquids and slurries, such as for example various aqueous solutions, liquid fertilizers, unhardened cement, foodstuffs, various semi-finished products, chemical products, paper pulp, but also various other liquids/solid matter/gas mixtures provided that these mixtures are "pumpable". One disadvantage of the existing shut-off means is that these may lead to discontinuity in the design of the pipe wall during installation in a pipe. Another disadvantage of the existing pipe shut-off means is that there are often increased costs during fitting and they also require maintenance and are susceptible to failures.

The object of the present invention is to provide a simple pipe shut-off means that does not experience the aforementioned disadvantages, or at least offers an alternative.

To this end, the invention provides a closable pipe coupling for selectively shutting off or opening up a medium passage, in particular a liquid fertilizer passage, comprising a substantially dimensionally stable hollow profile, wherein an opening is made in the wall of the profile at least over a part of the length of the hollow profile, a flexible closure element, which closure element engages with the hollow profile, such that the opening is completely covered by the flexible closure element, a cover element which covers the flexible closure element at the location of the opening in the profile, such that at least one medium-tight space to which a medium passage connects is situated between the flexible closure element and the cover element at the location of the opening in the profile, wherein the deformability of the flexible closure element, at least at the location of the opening in the profile, is greater than the deformability of the cover element.

By virtue of the fact that the hollow profile is dimensionally stable and has a continuous inner wall over a part of the circumference (at the point where the opening is not located), there is only a discontinuity in the design of the pipe wall at the location of the opening in the profile; the rest of the inner wall does not exhibit any such discontinuity. Moreover, the closure element can also be dimensioned such that - in an open state - the flexible closure element forms only a very small discontinuity in the inner wall of the profile at the location of the opening in the wall of the hollow profile, as a result of which - again in the open state - the passage is virtually not, or not at all, obstructed by the closable pipe coupling according to the present invention. By supplying or discharging a medium (a liquid or gas) to or from the medium-tight space, it is possible to move the flexible closure element, which covers the opening in the wall of the hollow profile, in such a way that the passage of medium is obstructed to a lesser or greater extent. The flexible closure element is moved (displaced) because the deformability of the flexible closure element is greater than the deformability of the cover element, and the supplying of medium to the medium-tight space increases the pressure in this space, with the result that the flexible closure element deforms in such a way that it obstructs the passage of the profile to a greater or lesser extent. Given a sufficiently high pressure and supply of the medium to the medium-tight space, the flexible closure element will completely shut off the passage of the hollow profile. When the passage through the hollow profile needs to be opened again, the discharging of medium from the medium-tight space will cause the flexible closure element, due to its flexible property, to more or less return to the starting position (the initial open position). The pipe coupling according to the invention has a very simple construction and can be manufactured at relatively low cost. Furthermore, the risk of soiling of the pipe coupling is low and the latter is not very susceptible to failures - in part owing to the simple construction. In addition, the pipe coupling can be controlled hydraulically or pneumatically in a simple manner. Furthermore, the flexible closure element can be displaced between a completely open position and a completely closed position in a continuously variable manner by regulation of the pressure in the medium-tight space. In this way, the closable pipe coupling can also be used for metering/regulating a flow rate of the medium flow through the pipe.

The flexible closure element is preferably fastened to an inner wall of the hollow profile, as a result of which said closure element produces no additional resistance, or none whatsoever, to a medium flowing through the profile. This measure has as little influence as possible on the passage of medium. The cover element subsequently covers the flexible closure element, at least at the location of the opening, in such a way that a medium-tight space is formed between these two elements.

The flexible closure element may be manufactured from a single material or may be composed of a plurality of materials that may or may not be built up in layers. One possible material selection is the use of rubber-like materials, but other materials which are elastically deformable can also be used. It is a requirement that the flexible closure element will return to the position in which the passage through the profile is opened up when the pressure in the medium-tight space is reduced. The flexible closure element and the cover element may be fastened to the profile by means of, for example, a suitable adhesive, a hose clamp, or by other mechanical fastening means.

In one embodiment variant of the present invention, the flexible closure element and/or the cover element enclose the profile over at least a part of the length of the profile, preferably at the location of the opening in the wall of the profile. By having the flexible closure element and the cover element enclose the profile (that is to say engage completely around the profile in a local manner), the construction is solid; after all, the closure element and the cover element are connected to the profile in a form-fitting manner.

Such a construction has the advantage that it contributes to the robustness of the construction, as a result of which it will be less susceptible to failures. During the life cycle of the closable pipe coupling, the flexible closure element will be moved between a closed position and an open position many times. By having the flexible closure element enclose the hollow profile, the forces acting on the flexible closure element will be distributed in a more uniform manner, with the result that the flexible closure element is less prone to wear. These advantages apply accordingly to the enclosing of the profile by the cover element. It is conceivable that the profile is provided with a plurality of openings in the profile wall. These openings may for example be positioned so as to be spaced apart in the length direction and/or be distributed over the circumference of the profile. The flexible closure element and the cover element may also be manufactured from rectangular material portions, wherein two opposite sides of the material portions are bonded to each other, such that a kind of sleeve is formed that encloses the profile. It is also conceivable that this sleeve is manufactured without bonding, and thus from an uninterrupted piece of material.

It is also advantageous for the profile to have a circular or elliptical cross section. Profiles having a circular or elliptical cross section can be obtained as standard purchased parts in many different sizes. On the other hand, such profiles have a relatively high strength, as a result of which they can be worked relatively easily. This is advantageous, inter alia, when making the opening (or openings) in the wall of the profile. In addition, profiles having a circular or elliptical cross section can be bent in a relatively simple manner, as a result of which it is conceivable that the closable pipe coupling can - if desired in a certain application - also be manufactured in a curved design, whereby the infeed and outfeed of the closable pipe coupling may be at an angle with respect to one another. This contributes to a wider applicability of the closable pipe coupling.

In an alternative embodiment variant, the opening in the profile may extend, at the centre of the opening, in a circumferential direction over at least 15% of the profile circumference, preferably at least 30% of the profile circumference. These dimensions provide the flexible closure element with sufficient space so that the flexible closure element has enough freedom of movement that it can obstruct the entire passage area. Given these dimensions of the opening, the flexible closure element is also so large that the required pressure for shutting off a passage does not have to be too high, and the risk of damage to the flexible closure element can be kept under control.

The flexible closure element preferably comprises at least one inflatable segment at the point where said closure element covers the opening in the profile, wherein the deformability of the inflatable segment is greater than the deformability of a part of the flexible closure element that is situated at a distance from the opening. Since such an inflatable segment preferably has a greater degree of deformability than the surrounding material, when the pressure in the medium-tight space increases, this part will deform at an earlier stage than a part of the flexible element that is situated at a distance from the inflatable segment. By positioning the inflatable segment at the location of the opening in the hollow profile, it is possible to determine the shape of the part to be inflated (the "bulging" part) of the inflatable segment. The inflatable segment in the flexible closure element preferably, but not necessarily, extends over the entire opening in the profile.

In yet another embodiment variant, the thickness of the flexible closure element at the location of the inflatable segment is smaller than the thickness of the flexible closure element at a distance from the inflatable segment. By locally designing the inflatable segment with a smaller thickness, a higher degree of deformability is obtained with unchanged material selection. This also makes it possible for the flexible closure element to be rapidly brought into the correct position when it is being fitted around the profile by simply aligning the inflatable part with the opening in the wall of the profile. The thinner segment of the closure element preferably transitions smoothly into the rest of the flexible closure element. By means of a smooth transition, the introduction of force into the flexible closure element is also regulated, and it is possible to prevent (excessive) peak stresses from occurring with the risk of accelerated wear. Another advantage of a smooth transition is that the risk of soiling of the closure element can be reduced. The transition may for example be effected in a smooth stepped manner. The deformability can also be influenced (manipulated) in this way. However, the present invention is not limited to these examples, and it is possible to apply any form of transition between the flexible element and the inflatable part whereby the thinning in the flexible closure element gradually transitions into the rest of the inflatable segment in an uninterrupted manner. The side of the flexible closure element facing towards the profile is of planar design, and the profiling is introduced on the side facing away from the profile. In this way, in an open state of the closable pipe coupling according to the present invention, the flexible closure element will produce little resistance and the risk of soiling is further limited. Moreover, it is also possible for the flexible closure element to be specifically provided with a raised part at the location of the opening in the profile, as a result of which the opening in the profile is completely filled by the flexible closure element; again, this relates to a measure that can be used to reduce the flow resistance through the profile. This measure of providing an elevation in the raised part can moreover be combined with the designing of the closure element to be thinner at the location of the opening.

In an alternative embodiment variant, the flexible closure element is movable at least between an opened-up position, wherein a free cross-sectional area is substantially equal over the entire length of the profile, and a shut-off position, wherein the flexible closure element is deformed such that it completely fills the hollow profile, at the location of the opening in the hollow profile, as a result of which there is locally no free space in the profile and the profile is thus closed. These two positions between which the flexible closure element is movable are reached by regulation of the pressure in the medium-tight space. In the opened-up position, the flexible closure element is located in the initial rest position, in which no or only a limited pressure is present in the medium-tight space. In this position, a cross-sectional area is substantially equal over the entire length of the profile. The cross-sectional area can be regarded as the area of the cross section of the profile that can be freely flowed through by the medium. At the location of the opening in the profile, the cross-sectional area is partly delimited by the flexible closure element, preferably with a minimal transition from the profile to the flexible closure element. In the shut-off position, in which the pressure in the medium-tight space is increased such that the flexible closure element is deformed, the passage of medium through the cross-sectional area at the location of the opening is obstructed.

The flexible closure element also preferably bears with a preload against the outer side around the opening in the profile. It is thus possible to prevent medium from flowing between the flexible closure element and the profile.

Preferably, the medium-tight space situated between the flexible closure element and the cover element can withstand a pressure that is high enough to deform the flexible closure element in such a way that the latter completely shuts off the passage of a medium (a pumpable combination of liquid, solid matter and/or a gas) through the profile, this entailing a pressure of at least 2 to 3 bar, for example. It has been found that such a pressure is sufficient for most applications, in particular when regulating the outflow of liquid fertilizer. When using the closable pipe coupling according to the present invention in other applications, such as for example the regulation of the outflow of liquid cement and/or in the case of greater profile cross sections, it is conceivable for the pipe coupling to be operated at a higher pressure.

In an alternative embodiment variant, the closure element is formed from a single material, for example a rubber-like material. It is, however, also possible to use other materials that can be reversibly deformed to a satisfactory extent. Manufacturing the flexible closure element from a single material makes it possible to prevent the build-up of stress between various material portions, which can contribute to a longer service life.

Both (head) ends of the closable pipe coupling are preferably designed for coupling to a hose. For the connection to the hose, the profile may for example be provided with connectors. Furthermore, it is possible for the profile to have a greater cross section at both (head) ends whereby a hose to be coupled can be pushed over or into the protruding ends. An additional hose clamp may then be used to further secure the hose that is connected to the pipe coupling. It is also conceivable to provide the ends with a mechanical coupling structure, such as a screw thread, to which a hose to be coupled can be connected.

The cover element preferably connects to the flexible closure element and/or the profile in a medium-tight manner, such that a medium-tight space is located between the flexible closure element and the cover element at the location of the opening in the profile. The feeding of a medium such as a gas (air/pneumatic) or liquid (hydraulic) under pressure into the medium-tight space will have the effect, because the pressure is - in dependence on situational circumstances - sufficiently high, that the flexible closure element deforms, in which case the profile will be "squeezed shut" to a greater or lesser extent. As an alternative to the medium-tight space formed by the flexible closure element and the cover element, it is also possible for a medium-tight bellows, for example an annular bellows, to which the at least one medium passage connects, to be situated between the interconnected flexible closure element and cover element. The connection between the flexible closure element and the cover element does not have to be medium-tight in this scenario; it is sufficient for there to merely be a connection of sufficient mechanical strength if a bellows is also used.

The invention also provides a method for using the closable pipe coupling according to the present invention as described above. The method comprising the steps of: a) fitting the closable pipe coupling in a medium-conducting pipe, b) passing a medium through the medium-conducting pipe, c) supplying or removing a medium to or from the medium-tight space, wherein the pressure on the flexible closure element is increased or reduced in such a way that it substantially completely obstructs or enables the passage of medium. In an alternative embodiment variant of the method, the conducted medium is in particular a liquid fertilizer. In another alternative embodiment variant of the method, the supplying or removing of the medium to or from the medium-tight space in step c) is in particular used to regulate a flow rate through the medium-conducting pipe. This method has the same advantages as the aforementioned advantages of the closable pipe coupling according to the invention, and these are also mentioned here by way of reference in relation to the method according to the present invention.

A particular application of the closable pipe coupling is the distribution of liquid fertilizer, for which use is often made of a fertilizer spreader with a large number of fertilizer-conducting hoses. It would be possible for a coupling according to the invention to be incorporated in each of these hoses at instances where it is not necessary for any liquid fertilizer to come out of a hose (e.g. transportation by road or at instances where there is a danger of excessive local fertilization of the soil), but it is also possible to make the fertilizer passage larger or smaller depending on the circumstances (e.g. fertilizer conditions, speed of travel, and (local) ground conditions).

The present invention will be explained in more detail below on the basis of the non-limiting exemplary embodiment shown in the figures below, in which:
- Figure 1 shows a perspective illustration of the closable pipe coupling according to one embodiment variant of the invention;
- Figure 2 shows a section in a length direction of segment A-A from Figure 1;
- Figure 3a shows a cross section of segment B-B from Figure 1, and
- Figure 3b shows a schematic illustration of the closable pipe coupling in a closed position.

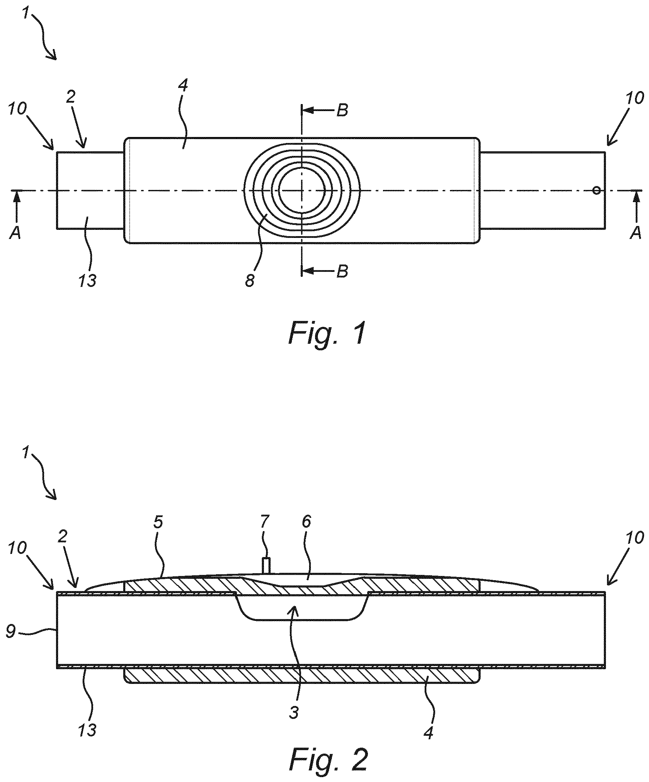

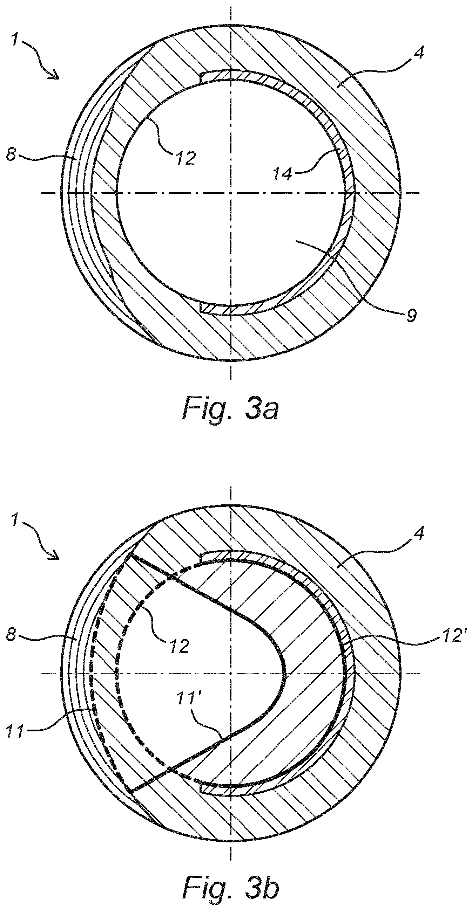

A closable pipe coupling 1 is shown in Figure 1, in which for illustrative purposes only a dimensionally stable profile 2 and a flexible closure element 4 are shown. In this embodiment variant, the dimensionally stable profile 2 has a circular cross section (see also Figures 3a and 3b). Here, the flexible closure element 4 engages around the dimensionally stable profile 2. The flexible closure element 4 engages around the hollow profile 2 in such a way that an opening 3 in the wall 13 of the profile 2 is completely covered. Located in the flexible closure element 4 at the location of the covered opening 3 is a segment 8 which has a smaller thickness than the rest of the closure element 4. Since the flexible closure element 4 has a reduced thickness at the location of the opening 3 (not visible), the deformability of the flexible closure element 4 at the location of the segment 8 is relatively great in comparison with that part of the closure element 4 which is remote from the segment 8. The two (head) ends 10 of the hollow profile 2 can be internally or externally coupled to a hose or pipe (not illustrated), for example a liquid fertilizer-conducting hose. The pipe coupling 1 can regulate the passage of a medium in a selective (continuous) manner.

Figure 2 shows a section of the pipe coupling 1 from Figure 1 at the location of cross section A-A. It is schematically indicated in this figure that the cover element 5 is fitted over the flexible closure element 4. Figure 2 clearly shows that the cover element 5 covers the flexible closure element 4 at the location of the opening 3 in the hollow profile 2. At the location of the opening 3, and in particular at the location of the segment 8 in the flexible closure element 4, a medium-tight space 6 is formed by cooperation with the cover element 5. Although the cover element 5 is fastened to the hollow profile 2 in this figure, it is also possible to fasten this cover element 5 to the flexible closure element 4, for example. It is important for a medium-tight space 6 to be formed, to which medium-tight space 6 a medium supply 7 is connected, by means of which the pressure in this space 6 can be increased. The medium supply 7 can for example be a supply of a hydraulic liquid or an air supply; any fluid that can increase the pressure in the medium-tight space 6 is possible. Since the cover element 5 is less deformable than the flexible closure element 4, the closable pipe coupling 1 can be operated by means of the supply and discharge of medium through the medium supply 7. The reduced deformability of the cover element 5 with respect to the flexible closure element 4 can for example be realized by manufacturing these elements from different materials or by dimensioning them differently. For instance, during the supplying of medium, the pressure in the medium-tight space 6 will increase, and the increased pressure, together with the lower degree of deformability of the cover element 5, will cause the flexible closure element 4 to deform. As the pressure increases, the degree of deformation of the flexible closure element 4 will also increase. The extreme positions between which the flexible closure element 4 is deformable are schematically illustrated in Figures 3a and 3b. Figure 2 furthermore shows an inner area 9 with which a medium to be transported also comes in contact. Due to the aforementioned deformation of the flexible closure element 4, this passage 9 will be obstructed at the location of at least a part of the opening 3, whereby the passage of the medium is thus also obstructed.

Figures 3a and 3b respectively show the pipe coupling 1 in a completely open position and a completely closed position. Both figures show the pipe coupling 1 at the centre of the opening 3 along the cross section B-B from Figure 1. Figure 3a, the completely open position, shows a substantially circular free cross-sectional area 9, through which area 9 a medium can be transported in an unobstructed manner. The cross-sectional area is delimited by a part of the inner side 14 of the hollow profile 2 and a part of the inner side 12 of the flexible closure element 4. These components 14, 4 connect together so smoothly that they together form a circle in the open position. Due to the material selection of the flexible closure element 4, the (reversible) flexible closure element 4 will always return to the position illustrated in Figure 3a in an unloaded state (or a state with limited loading).

Figure 3b shows the cross section from Figure 3a, in which case it is now schematically indicated that the flexible closure element 4 has been deformed. This deformation is the result of, on the one hand, the greater degree of flexibility of segment 8 of the flexible closure element 4 with respect to the cover element 5 (see Fig. 2) and, on the other hand, the build-up of a pressure by the supply of a medium into the medium-tight space 6 (see Fig. 2). If the pressure in the medium-tight space 6 is sufficiently high, the segment 8 of the flexible closure element 4 will deform in such a way that it completely locally seals the cross-sectional area 9 of the profile 2. "Locally" is to be understood to mean at the location of the opening 3 in the profile 2. A part of the inner wall 12 of the flexible closure element 4 is forced against the inner wall 14 of the hollow profile 2 by the pressure in the medium-tight space 6, the inner wall 12 reaching the extreme position 12'. In a similar manner, a part of the outer wall 11 of the flexible closure element 4 is forced inward by the pressure in the medium-tight space 6 until said outer wall reaches position 11'. The passage of medium is now obstructed as long as the pressure on the medium-tight space 6 is maintained. The reference numerals 11 and 11' both refer to the outer wall 11 of the flexible closure element 4; 11 in the open position and 11' in the closed position. This also applies to the inner side 12 and 12' of the flexible closure element 4.

## Claims

1. Closable pipe coupling for selectively shutting off or opening up a medium passage, in particular a liquid fertilizer passage, comprising:
- a substantially dimensionally stable hollow profile, wherein an opening is made in the wall of the profile at least over a part of the length of the hollow profile,
- a flexible closure element, which closure element engages with the hollow profile, such that the opening is completely covered by the flexible closure element,
- a cover element which covers the flexible closure element at the location of the opening in the profile, such that at least one medium-tight space to which a medium passage connects is situated between the flexible closure element and the cover element at the location of the opening in the profile,
wherein the deformability of the flexible closure element, at least at the location of the opening in the profile, is greater than the deformability of the cover element.

2. Closable pipe coupling according to Claim 1, wherein the flexible closure element and/or the cover element enclose the profile over at least a part of the length of the profile, preferably at the location of the opening in the wall of the profile.

3. Closable pipe coupling according to either of the preceding claims, wherein the profile has a circular or elliptical cross section.

4. Closable pipe coupling according to Claim 3, wherein the opening in the profile extends, at the centre of the opening, in a circumferential direction over at least 15% of the pipe diameter, preferably at least 30% of the pipe diameter.

5. Closable pipe coupling according to one of the preceding claims, wherein the flexible closure element comprises at least one inflatable segment at the point where said closure element covers the opening in the profile, wherein the deformability of the inflatable segment is greater than the deformability of a part of the flexible closure element that is situated at a distance from the opening.

6. Closable pipe coupling according to Claim 5, wherein the thickness of the flexible closure element at the location of the inflatable segment is smaller than the thickness of the flexible closure element at a distance from the inflatable segment.

7. Closable pipe coupling according to Claim 6, wherein the thinning in the flexible closure element transitions into the rest of the flexible closure element in an uninterrupted manner.

8. Closable pipe coupling according to one of the preceding claims, wherein the flexible closure element is movable at least between:
- an opened-up position, wherein a free cross-sectional area is substantially equal over the entire length of the profile, and
- a shut-off position, wherein the flexible closure element is deformed such that it completely fills the hollow profile, at the location of the opening in the hollow profile, as a result of which there is locally no free space in the profile.

9. Closable pipe coupling according to one of the preceding claims, wherein the medium-tight space situated between the flexible closure element and the cover element can withstand a pressure that is high enough to deform the flexible closure element in such a way that the latter completely shuts off the passage of medium through the profile, for example a pressure of at least 1 bar, preferably of at least 4 bar.

10. Closable pipe coupling according to one of the preceding claims, wherein the closure element is formed from a single material.

11. Closable pipe coupling according to one of the preceding claims, wherein both head ends of the closable pipe coupling are designed for coupling to a hose.

12. Closable pipe coupling according to one of the preceding claims, wherein the cover element connects to the flexible closure element and/or the profile in a medium-tight manner, such that a medium-tight space is located between the flexible closure element and the cover element at the location of the opening in the profile.

13. Method for using the closable pipe coupling according to one of Claims 1-12, comprising the steps of:
a) fitting the closable pipe coupling in a medium-conducting pipe,
b) passing a medium through the medium-conducting pipe,
c) supplying or removing a medium to or from the medium-tight space, wherein the pressure on the flexible closure element is increased or reduced in such a way that it substantially completely obstructs or enables the passage of medium.

14. Method according to Claim 13, wherein the conducted medium is in particular a liquid fertilizer.

15. Method according to Claim 13 or 14, wherein the supplying or removing of the medium to or from the medium-tight space in step c) is in particular used to regulate a flow rate through the medium-conducting pipe.
